**Europäisches Patentamt**

**European Patent Office**

**Office européen des brevets**

(11) Numéro de publication : **0 432 681 B1**

(12)

# FASCICULE DE BREVET EUROPEEN

(45) Date de publication du fascicule du brevet :
**06.09.95 Bulletin 95/36**

(51) Int. Cl.$^6$ : **H02G 1/02,** H01B 5/00,
H01B 13/22, H01B 13/26

(21) Numéro de dépôt : **90123679.4**

(22) Date de dépôt : **10.12.90**

(54) **Procédé de fabrication d'un câble de ligne électrique aérienne de transport d'énergie, et équipement de mise en oeuvre de ce procédé.**

(30) Priorité : **13.12.89 FR 8916498**

(43) Date de publication de la demande :
**19.06.91 Bulletin 91/25**

(45) Mention de la délivrance du brevet :
**06.09.95 Bulletin 95/36**

(84) Etats contractants désignés :
**BE CH DE DK FR GB IT LI LU NL SE**

(56) Documents cités :
**DE-A- 3 228 227**
**DE-B- 1 059 523**
**FR-A- 2 306 511**
**US-A- 2 432 121**

(73) Titulaire : **CABLERIES DE LENS**
**36 rue de Londres**
**F-62300 Lens (FR)**

(72) Inventeur : **Delomel, Jean-Charles**
**7, rue Pasteur**
**F-62300 Lens (FR)**

(74) Mandataire : **Weinmiller, Jürgen et al**
**Lennéstrasse 9**
**Postfach 24**
**D-82336 Feldafing (DE)**

## Description

La présente invention concerne un câble pour ligne électrique aérienne de transport d'énergie à multiplicité de conducteurs élémentaires. Elle porte sur un procédé de fabrication d'un tel câble et un équipement de mise en oeuvre de ce procédé.

Les câbles électriques pour ligne électrique aérienne de transport d'énergie connus se composent d'un fil central élémentaire autour duquel sont toronnés des fils élémentaires. Ces fils peuvent être en cuivre, aluminium ou alliage d'aluminium. On peut également avoir des câbles mixtes avec l'âme en fils d'acier et les autres fils en aluminium ou alliage d'aluminium.

Ils présentent des inconvénients. En premier lieu, la longueur nécessaire des fils élémentaires toronnés autour du fil central doit être supérieure à la longueur du câble obtenu. Si $\alpha$ est l'angle formé par les fils élémentaires avec l'axe du câble et l une longueur déterminée de l'un d'eux, la longueur efficace de chaque fil élémentaire (parallèlement à l'axe du câble) n'est que de l $(1 - \dfrac{1}{\cos\alpha})$, ce qui augmente le coût du câble par unité de longueur. Par ailleurs, le courant alternatif du câble engendre des flux magnétiques et des pertes magnétiques dans le fil central.

En outre, la surface externe du conducteur n'est pas lisse, ce qui entraîne une turbulence notable de l'écoulement d'air autour du câble et des vibrations de ce dernier.

Le document FR-A-2306511 décrit un procédé et un équipement de fabrication d'un câble à fils élémentaires multiples parallèles et rendus solidaires par des moyens de serrage. Selon ce document, on constitue un faisceau dans lequel lesdits fils sont parallèles et proches les uns des autres et on enserre ledit faisceau dans lesdits moyens de serrage pour l'obtention dudit câble.

Le document DE-B-1059523 décrit quant à lui un procédé pour tirer un câble de ligne aérienne de transport d'énergie pour sa mise en place sur des pylônes de ligne.

La présente invention a pour but de procurer un câble pour ligne électrique aérienne de transport d'énergie dont le coût soit moins élevé, qui entraîne moins de pertes magnétiques et soit moins sujet aux vibrations, et dont la fabrication et la pose soient obtenues simultanément.

Elle a pour objet un procédé de fabrication suivant la revendication 1.

Elle a également pour objet un équipement de mise en oeuvre de ce procédé suivant la revendication 3.

Dans cet équipement, les moyens de serrage sont constitués par une enveloppe cylindrique, obtenue à partir d'une bande initialement plane, qui est déformée en une gouttière puis fermée sur elle-même, ou sont constitués par un ruban enroulé hélicoïdalement autour du faisceau, ou encore sont constitués par des colliers de serrage.

En particulier, la présence autour des fils élémentaires d'une enveloppe cylindrique donne au câble une surface externe beaucoup plus lisse, décroît la turbulence de l'air au contact de la surface externe du câble, réduit ses vibrations et réduit au minimum possible l'effet corona.

S'il est nécessaire d'adjoindre au câble de transport d'énergie des organes de télécommunication, le câble comprendra au centre un tube contenant un ou plusieurs conducteurs électriques ou fibres optiques de télécommunications.

Il est décrit ci-après, à titre d'exemples et en référence aux figures du dessin annexé, des câbles selon l'invention et des dispositifs de fabrication de ces câbles.

La figure 1 représente en perspective un fragment de câble, dont les fils élémentaires sont enserrés dans une enveloppe cylindrique.

La figure 2 représente schématiquement un dispositif de fabrication et de mise en place d'un tel câble.

La figure 3 représente à plus grande échelle, en élévation, une plaque de guidage des fils élémentaires.

La figure 4 représente à plus grande échelle des organes d'introduction d'une bande et de mise en forme de celle-ci en gouttière entourant les fils élémentaires, puis de fermeture de la gouttière.

La figure 5 représente à plus grande échelle des galets de fermeture de la gouttière, vus en plan.

La figure 6 représente une vue plane d'un fragment de câble dont les fils sont enserrés dans un ruban enroulé hélicoïdalement.

La figure 7 représente une vue plane d'un fragment de câble dont les fils sont enserrés à intervalles réguliers dans des colliers de serrage.

La figure 8 représente en coupe perpendiculaire à son axe un câble ayant un tube au centre contenant une fibre optique de télécommunications.

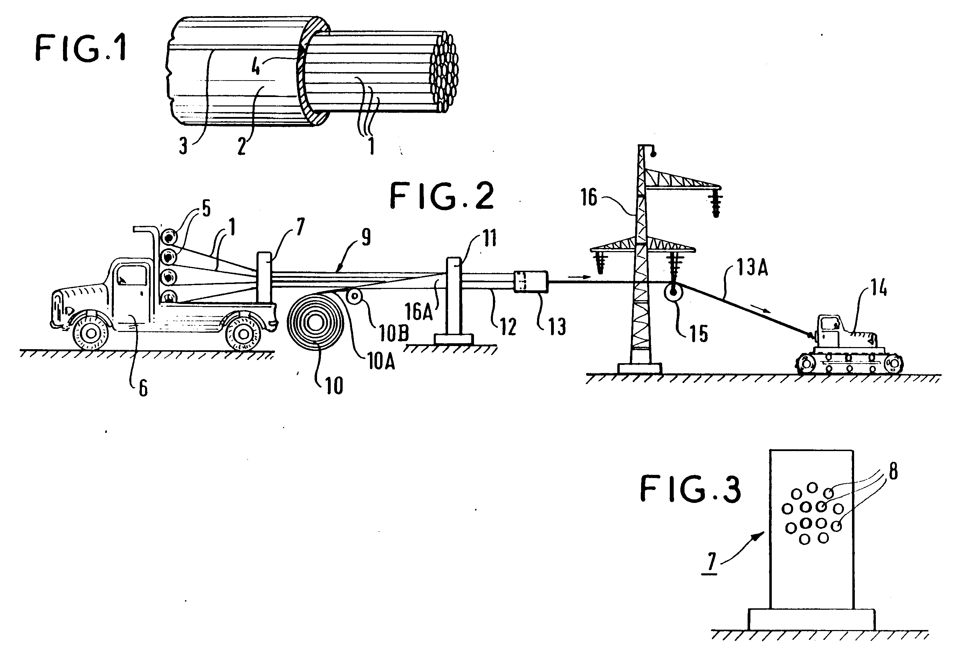

Dans la figure 1, les fils élémentaires 1 sont enserrés dans une enveloppe cylindrique 2 à bords jointifs selon une ligne de contact 3, éventuellement soudés par un cordon de soudure longitudinal 4.

La figure 2 représente la fabrication et la mise en place simultanées d'un câble à fils parallèles, ce qui évite d'effectuer séparément et successivement la fabrication du câble, son stockage et son transport sur le chantier de pose, puis son montage.

Les fils élémentaires 1 se déroulent à partir de bobines 5 disposées sur un camion 6, portant à son extrémité arrière une plaque 7 perforée de trous proches les uns des autres, la plaque étant vue en élévation en figure 3 avec ses trous 8.

A la sortie de la plaque 7, les fils élémentaires sont parallèles et proches les uns des autres ; ils forment un faisceau 9. Il se déroule par ailleurs à partir d'un rouleau 10 une bande de métal ou de matière plastique 10A, par exemple d'aluminium, qui, guidée par un galet 10B, est introduite avec les fils dans un organe de formage représenté très schématiquement en 11, dans lequel la bande est mise progressivement en forme de gouttière, puis la gouttière est refermée, pour donner le câble terminé 12. Celui-ci est tiré par l'intermédiaire d'un connecteur 13 par un câble de traction en acier 13A, entraîné par un tracteur 14, et passant sur une poulie 15 de mise en place sur un bras d'un pylône 16.

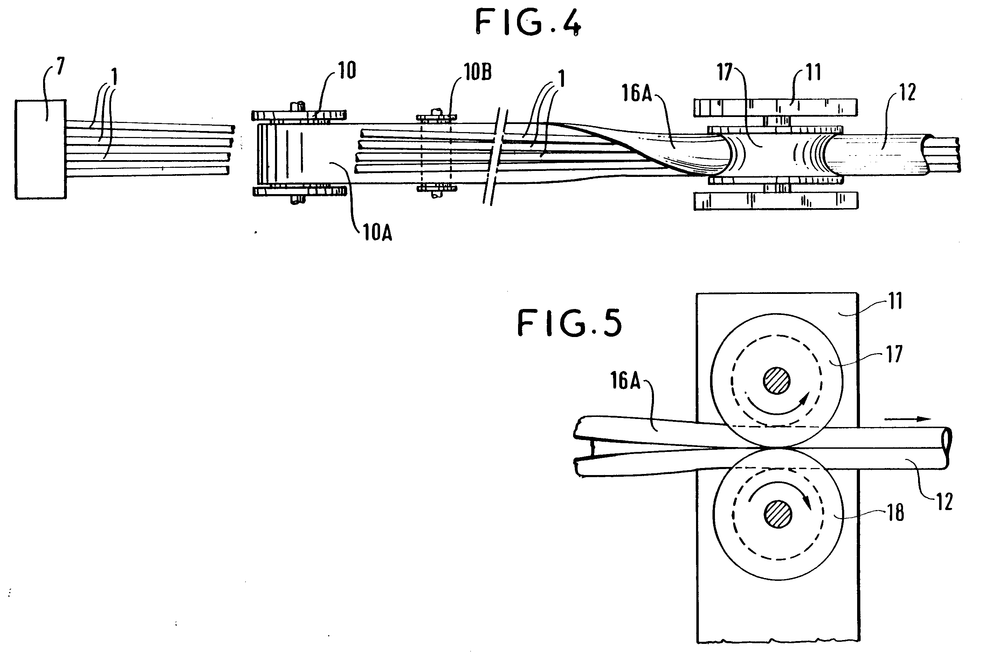

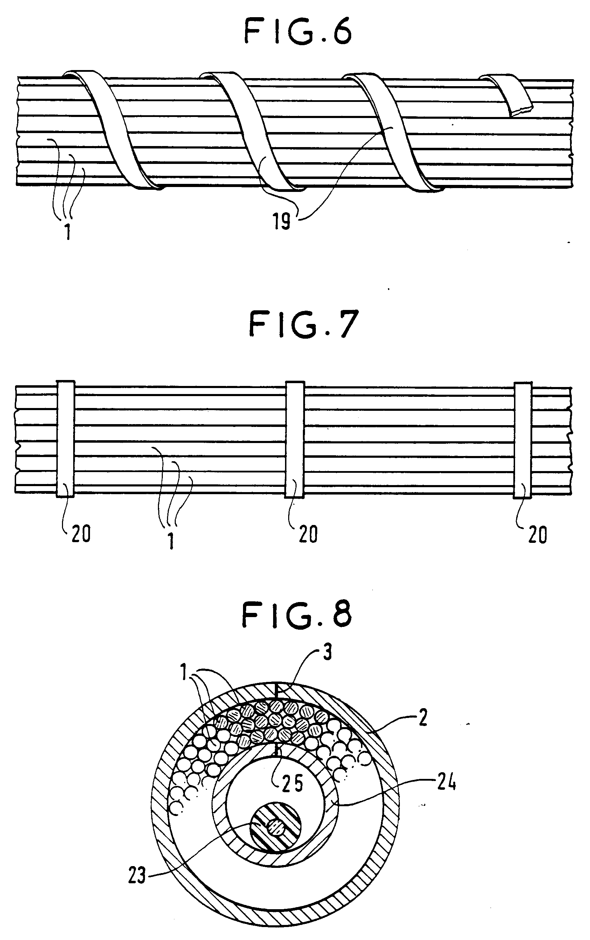

Les figures 4 et 5 représentent schématiquement, mais plus en détail, l'organe de formage de l'enveloppe du câble.

A partir du rouleau 10, la bande de métal ou matière plastique 10A passe sur une poulie 10B, puis dans une succession d'auges de formage de rayon de courbure de plus en plus faible, non représentées. A la sortie de celles-ci, la gouttière 16A est calibrée par passage entre deux galets 17, 18, lui donnant le diamètre définitif du câble terminé 12.

La figure 6 représente la variante où les fils élémentaires sont serrés entre eux à l'aide d'un ruban enroulé hélicoïdalement 19. Ce ruban est enroulé à partir d'une bobine entraînée en rotation autour du faisceau des fils, selon une technique bien connue en câblerie. Le ruban a été représenté de faible largeur et enroulé de façon lâche autour des fils, pour plus de compréhension, mais il sera en pratique enroulé de façon serrée et pourra être plus large, en s'enroulant éventuellement bord à bord ou même à recouvrement.

Dans la figure 7, les fils élémentaires 1 sont serrés entre eux à l'aide de colliers 20, disposés à intervalles réguliers le long du câble. Ceux-ci sont approvisionnés, mis en place et serrés à l'aide d'un poste de serrage, non représenté, les plaçant et les serrant à intervalles réguliers autour des fils en cours d'avance.

Le câble de la figure 8 comporte dans la zone centrale interne aux fils de puissance 1 une fibre optique de télécommunication 23 disposée de façon lâche à l'intérieur d'un tube externe 24, dont les bords sont soudés par une soudure longitudinale 25.

On fabrique naturellement un tel câble en réalisant dans une opération préalable la dépose de la fibre optique (ou d'un câble électrique de télécommunication) dans un tube destiné à devenir l'élément interne, en disposant les fils élémentaires de puissance autour de ce tube interne par passage dans des trous d'une zone annulaire d'une plaque, puis en formant autour de ceux-ci le tube externe, comme décrit ci-dessus.

## Revendications

1. Procédé de fabrication d'un câble de ligne aérienne de transport d'énergie, à fils élémentaires multiples parallèles et rendus solidaires par des moyens de serrage, consistant à fabriquer ledit câble de transport d'énergie directement sur le site de montage dudit câble sur des pylônes de ligne, en prélevant lesdits fils élémentaires de bobines individuelles, en constituant un faisceau dans lequel lesdits fils sont parallèles et proches les uns des autres et en enserrant ledit faisceau dans lesdits moyens de serrage pour l'obtention dudit câble, et à tirer ce câble pour sa mise en place sur lesdits pylônes au fur et à mesure de sa fabrication.

2. Procédé de fabrication selon la revendication 1, caractérisé en ce qu'il consiste en outre à déposer une fibre optique (23) dans un tube (24), dans une opération préalable, et à constituer ledit faisceau (9) autour dudit tube.

3. Equipement de mise en oeuvre du procédé selon l'une des revendications 1 et 2, comportant un poste d'approvisionnement en fils élémentaires portant lesdites bobines individuelles (5), une plaque (7) percée d'une pluralité orifices de guidage desdits fils prélevés desdites bobines, pour délivrer ledit faisceau, dont les fils sont parallèles et proches les uns des autres, et un poste de serrage (11) approvisionné en moyens de serrage, dans lequel ledit faisceau défile et est enserré dans lesdits moyens de serrage, pour l'obtention dudit câble (12), caractérisé en ce qu'il comporte en outre un moyen de guidage (15) sur un bras de pylône (16), recevant ledit câble (12) du poste de serrage, et un engin de traction (14) auquel est fixée l'extrémité de câble.

4. Equipement selon la revendication 3, caractérisé en ce qu'il comporte en outre un poste d'approvisionnement en moyens de serrage, à rouleau (10) de bande plane continue de serrage (10A) et moyens (11) de déformation de ladite bande en une gouttière, ladite gouttière étant reçue en continu avec ledit faisceau et fermée sur ledit faisceau, dans ledit poste de serrage.

5. Equipement selon la revendication 3, caractérisé en ce qu'il comporte en outre un organe d'approvisionnement (10) en moyens de serrage constitués par un ruban, monté rotatif autour de l'axe de défilement dudit faiseau dans le poste de serrage, pour enrouler hélicoïdalement le ruban autour dudit faisceau.

6. Equipement selon la revendication 3, caractérisé en ce que ledit poste de serrage est un poste de montage de colliers de serrage (20) sur ledit faisceau.

## Patentansprüche

1. Verfahren zur Herstellung eines Freileitungsseils für den Energietransport, bestehend aus vielen parallelen und durch Klemmittel festgelegten Einzeldrähten, wobei das Verfahren darin besteht, das Energietransportseil direkt am Ort der Montage des Seils an den Leitungsmasten herzustellen, indem die Einzeldrähte von einzelnen Spulen unter Bildung eines Bündels abgezogen werden, in welchem die Drähte parallel und eng nebeneinander verlaufen, worauf das Bündel in den Klemmitteln zusammengepreßt wird, um das Seil zu ergeben, und wobei das Verfahren weiter darin besteht, das so hergestellte Seil zur Montage im Verlauf seiner Herstellung auf die Masten zu ziehen.

2. Herstellungsverfahren nach Anspruch 1, dadurch gekennzeichnet, daß es weiter darin besteht, in einer vorhergehenden Operation eine Lichtleitfaser (23) in einem Rohr (24) unterzubringen und das Bündel (9) um dieses Rohr herum aufzubauen.

3. Anlage zur Durchführung des Verfahrens nach einem der Ansprüche 1 und 2, mit einer die einzelnen Einzeldrahtspulen (5) tragende Versorgungsstation, mit einer Platte (7), die mit einer Vielzahl von Löchern zur Führung der von den Spulen abgenommenen Drähte versehen ist, um das Bündel zu liefern, dessen Drähte parallel und eng nebeneinander verlaufen, und mit einer Klemmstation (11), die mit Klemmitteln versehen ist, durch die das Bündel läuft und von den Klemmitteln eingeklemmt wird, um das Seil (12) zu erhalten, dadurch gekennzeichnet, daß die Anlage weiter Führungsmittel (15) an einem Arm des Masts (16), die das Seil (12) von der Klemmstation zugeführt erhält, sowie eine Zugmaschine (14) aufweist, an der das Ende des Seils befestigt wird.

4. Anlage nach Anspruch 3, dadurch gekennzeichnet, daß sie weiter eine Versorgungsstation für Klemmittel in Form eines durchgehenden flachen Spannbandes (10A) auf einer Rolle (10) sowie Mittel zum Formen des Bandes in eine Rinne aufweist, wobei die Rinne in der Klemmstation kontinuierlich mit dem Bündel empfangen und um das Bündel herum geschlossen wird.

5. Anlage nach Anspruch 3, dadurch gekennzeichnet, daß sie weiter ein Versorgungsorgan (10) zur Versorgung mit aus einem Band bestehenden Klemmitteln aufweist, wobei dieses Organ drehbar um die Laufachse des Bündels in der Klemmstation gelagert ist, um das Band spiralförmig um das Bündel zu wickeln.

6. Anlage nach Anspruch 3, dadurch gekennzeichnet, daß die Klemmstation eine Station zum Montieren von Spannringen (20) auf dem Bündel ist.

## Claims

1. A method of manufacturing an overhead electrical power transmission line comprising multiple parallel elementary wire strands held together by clamping means, consisting in manufacturing said power transmission line directly on the site where said cable is mounted on pylons of the transmission line, in taking said stands from individual reels, in making a bundle in which said strands are parallel and close together, and in clamping said bundle in said clamping means in order to obtain said cable, and in drawing said cable so as to install it on said pylons, as it is being manufactured.

2. A manufacturing method according to claim 1, characterized in that it further includes placing an optical fiber (23) in a tube (24) in a prior operation, and then in making up said bundle (9) around said tube.

3. Equipment for implementing the method according to claim 1 or 2, including a strand feed station carrying said individual reels (5), a plate (7) pierced by a plurality of orifices for guiding said strands taken from said reels, to deliver said bundle having strands which are parallel and close together, and a clamping station (11) provided with clamping means through which said bundle travels and in which it is clamped by said clamping means in order to obtain said cable (12), said equipment being characterized in that it further includes guide means (15) for guiding the cable on an arm of a pylon (16), said guide means receiving said cable (12) from the clamping station; and cable-pulling means (14) to which the end of the cable is fixed.

4. Equipment according to claim 3, characterized in that it further includes a station for feeding the clamping means from a roll (10) of plane continuous clamping strip (10A), and means (11) for deforming said strip into a trough-shape, said trough being received continuously with said bundle and being closed over said bundle in said clamping station.

5. Equipment according to claim 3, characterized in that it further includes a member (10) for delivering clamping means constituted by a tape, the member being mounted to rotate about the axis of travel of said bundle through the clamping station so as to wind the tape helically around said bundle.

6. Equipment according to claim 3, characterized in that said clamping station is a station where clamping collars (20) are mounted on said bundle.

FIG.1

FIG.2

FIG.3

EP 0 432 681 B1

FIG.4

FIG.5

# FIG.6

1

19

# FIG.7

20

1

20

20

# FIG.8

3

1

2

25

24

23